# EUROPÄISCHE PATENTSCHRIFT

(11) **EP 2 842 469 B1**
(45) Veröffentlichungstag und Bekanntmachung des Hinweises auf die Patenterteilung: **28.02.2018**
(21) Anmeldenummer: 13182291.8
(22) Anmeldetag: 29.08.2013
(51) Int. Cl.: A47K 13/10, A47K 13/12, E05F 5/02

(54) **Scharnier, Dämpfungsvorrichtung und mobile Toilette**
Hinge, damping device and mobile toilet
Charnière, dispositif d'amortissement et toilette mobile

(43) Veröffentlichungstag der Anmeldung: 04.03.2015
(73) Patentinhaber: Dometic GmbH, 57074 Siegen (DE)
(72) Erfinder: Jochim, Tim, 57234 Wilnsdorf (DE); Oxenfarth, Jens, 58256 Ennepetal (DE)
(74) Vertreter: Grosse, Felix Christopher

(56) Entgegenhaltungen:
- DE-A1-102006 020 205
- DE-U1-202004 013 255
- JP-A- 2004 097 342
- US-A1- 2002 062 518
- US-B1- 6 687 921

## Beschreibung

Die Erfindung betrifft ein Scharnier mit einer Toilettenbrille und einem Toilettendeckel zur Verwendung in einer eine Toilettenschüssel aufweisenden mobilen Toilette, wobei die Toilettenbrille und der Toilettendeckel durch das Scharnier jeweils verschwenkbar an der Toilettenschüssel angeordnet sind und eine gemeinsame Schwenkachse aufweisen.
Ferner betrifft die Erfindung eine Dämpfungsvorrichtung zum Nachrüsten eines Scharniers. Die Erfindung betrifft zudem eine mobile Toilette mit einer Toilettenschüssel, einer Toilettenbrille und einem Toilettendeckel, wobei die Toilettenbrille und der Toilettendeckel durch ein Scharnier jeweils verschwenkbar an der Toilettenschüssel angeordnet sind und eine gemeinsame Schwenkachse aufweisen.
Als mobile Toiletten werden solche verstanden, die an kein stationäres Abwassersystem angeschlossen sind, sondern beispielsweise an einen Tank. Mobile Toiletten werden beispielsweise in Fahrzeugen, wie Caravans, Flugzeuge oder Schiffe verwendet.
Scharniere dienen der schwenkbaren Lagerung der Sitzanordnung aus Toilettendeckel und ggf. Toilettenbrille an einer Toilettenschüssel einer Toilette, so dass die Toilette im Bedarfsfall zugänglich oder abdeckbar ist.

Ein Aufbau solcher Scharniere mit einer Toilettenbrille und einem Toilettendeckel gemäß dem Oberbegriff des Anspruchs 1 kann beispielsweise aus der DE 10 2006 020 205 A1 entnommen werden, wobei hierin eine besonders vorteilhafte Ausgestaltung des Scharniers zur erleichterten Demontage des Toilettendeckels und der Toilettenbrille offenbart wird. Dämpfungsvorrichtungen, die auch als Absenkautomatik bekannt sind, dämpfen die Absenkbewegung von dem Toilettendeckel und ggf. der Toilettenbrille, um Lärm und vorzeitigen Verschleiß zu vermeiden. Die Dämpfung der Absenkbewegung wird beispielsweise durch eine federvorgespannte Kulissenführung oder mittels eines Flüssigkeitsdämpfers realisiert. Anordnungen von Toilettendeckel und Toilettenbrille mit einer integrierten Dämpfungsvorrichtung sind bekannt. Ferner sind Dämpfungsvorrichtungen zur Nachrüstung von herkömmlichen, stationären Toiletten bekannt.

Bei marktüblichen Scharnieren und Dämpfungsvorrichtungen ist es für eine entsprechende Nachrüstung notwendig, das Scharnier samt der Sitzanordnung zu demontieren und zumindest teilweise auszuwechseln. Beispielsweise kann es notwendig sein, den Toilettendeckel und/oder die Toilettenbrille, bzw. das Scharnier insgesamt auszuwechseln. Die Nachrüstung ist derzeit dementsprechend aufwendig und umständlich.
Im Weiteren werden bekannte Dämpfungsvorrichtungen zur Nachrüstung nach dem Einbau ein essentieller Teil des Scharniers; eine schwenkbare Lagerung der Sitzordnung ohne die Dämpfungsvorrichtung im Scharnier ist dann nicht ohne weiteres möglich. Ist diese beispielsweise defekt, kann die Dämpfungsvorrichtung zum Austausch nicht einfach entfernt und das Scharnier ohne diese weiter benutzt werden. Die EP 1 199 020 B1 offenbart eine derartige Dämpfungsvorrichtung.
Es ist daher die Aufgabe der vorliegenden Erfindung, ein neuartiges Scharnier, eine neuartige Dämpfungsvorrichtung und eine neuartige mobile Toilette bereitzustellen, und insbesondere eine besonders schnelle, einfache, platzsparende, kostengünstige Nachrüstung bzw. einen einfachen Austausch von einer Dämpfungsvorrichtung in einem Scharnier bzw. einer mobilen Toilette zu ermöglichen.

Diese Aufgabe wird gelöst durch ein eingangs beschriebenes Scharnier mit einer Toilettenbrille und einem Toilettendeckel, das erfindungsgemäß zumindest einen Aufnahmebereich aufweist, der zur Aufnahme mindestens einer nachrüstbaren Dämpfungsvorrichtung zur Dämpfung der Schwenkbewegung der Toilettenbrille oder des Toilettendeckels um die Schwenkachse ausgebildet ist, wobei der Aufnahmebereich ausgebildet ist, die mindestens eine nachrüstbare Dämpfungsvorrichtung ohne Demontage der Toilettenbrille oder des Toilettendeckels im eingebauten Zustand des Scharniers aufzunehmen.
Mittels des Aufnahmebereichs ist nun eine Nachrüstung der Dämpfungsvorrichtung, ohne Demontage der Toilettenbrille, des Toilettendeckels oder des Scharniers, im zusammengebauten Zustand des Scharniers bzw. in Einbaulage des Scharniers in eine Toilette, möglich. Eine besonders schnelle, einfache, platzsparende und kostengünstige Nachrüstung wird damit erreicht und das ursprüngliche Scharnier bleibt bestehen. Um den erfindungsgemäßen Aufnahmebereich bereitstellen zu können, musste mit der konventionellen Bauweise eines Scharniers für stationäre Toiletten gebrochen werden. Herkömmliche Scharniere sind mittels eines Gestänges aus Metall an einer Toilettenschüssel aus Keramik befestigt. Das Gestänge dient gewissermaßen als Achse, die die Teile des Scharniers miteinander schwenkbar verbindet. Das erfindungsgemäße Scharnier weist einen neuartigen Aufbau ohne Gestänge auf. Durch den Aufnahmebereich anstelle des Gestänges ist nun eine besonders zweckmäßige Aufnahme einer ergänzenden Dämpfungsvorrichtung realisierbar.

Der Aufnahmebereich kann derart ausgebildet sein, dass die ergänzende Dämpfungsvorrichtung an dem Aufnahmebereich werkzeuglos befestigbar ist, um eine besonders schnelle und unkomplizierte Nachrüstung zu ermöglichen. Die werkzeuglose Befestigungsmöglichkeit ist insbesondere bei beengten Raumverhältnissen vorteilhaft.

Gemäß einer Weiterbildung weist das Scharnier einen zweiten Aufnahmebereich auf, der zur Aufnahme einer zweiten Dämpfungsvorrichtung zur Dämpfung der Schwenkbewegung der Toilettenbrille oder des Toilettendeckels um die Schwenkachse ausgebildet ist. Derart kann ein Scharnier bereitgestellt werden, das zweckmäßigerweise zwei Dämpfungsvorrichtungen, jeweils eine für Toilettenbrille und Toilettendeckel, aufnehmen kann.

Der erste und/oder zweite Aufnahmebereich weist bzw. weisen eine Montageöffnung zum vorzugsweise werkzeuglosen Einführen einer Dämpfungsvorrichtung in den ersten und/oder zweiten Aufnahmebereich auf. Mittels der Montageöffnung wird ein direkter und schneller Zugang zu dem Anlagebereich auch im zusammengebauten Zustand des Scharniers bereitgestellt.

Aufnahmebereich und Montageöffnung können zumindest teilweise korrespondierend zu der ergänzenden Dämpfungsvorrichtung ausgebildet sein, so dass diese beispielsweise passgenau in den Aufnahmebereich einschiebbar ist.

Der erste und/oder zweite Aufnahmebereich ist weiterbildend zumindest teilweise symmetrisch, vorzugsweise rotationssymmetrisch in Bezug auf die Schwenkachse ausgebildet. Derart kann eine ergänzende Dämpfungsvorrichtung für eine besonders zweckmäßige Wirkverbindung mit dem Scharnier ausgerichtet werden. Insbesondere ist eine Anordnung derart möglich, dass die Rotationsachse der ergänzenden Dämpfungsvorrichtung und Schwenkachse des Scharniers deckungsgleich angeordnet sind bzw. zueinander fluchten.

Für eine zweckmäßige Wirkverbindung zwischen Scharnier, Toilettenschüssel, Toilettenbrille und Toilettendeckel, sowie einer Dämpfungseinrichtung, ist der erste und/ oder zweite Aufnahmebereich weiterbildend aus einer der Toilettenschüssel zugeordneten ersten Aufnahme, einer der Toilettenbrille zugeordneten zweiten Aufnahme und einer dem Toilettendeckel zugeordneten dritten Aufnahme gebildet.

Gemäß einer Weiterbildung ist die erste Aufnahme einstückig mit der Toilettenschüssel, die zweiten Aufnahme einstückig mit der Toilettenbrille und die dritten Aufnahme einstückig mit dem Toilettendeckel ausgebildet. Auf diese Weise kann ein besonders platzsparendes Scharnier bereitgestellt werden. Ferner ist das erfindungsgemäße Scharnier dadurch kostengünstig herstellbar, da kein gesonderter Arbeitsprozess nötig ist, sondern das Scharnier gewissermaßen in die jeweiligen Bestandteile der Toilette integriert ist.

Beispielsweise ist das erfindungsgemäße Scharnier durch ein Spritzgussverfahren herstellbar. Vorzugsweise ist das Scharnier zumindest teilweise aus einem elastischen Kunststoff herstellbar.

Die Aufnahmen des Scharnier bzw. die jeweils einstückig mit diesen ausgebildete Toilettenschüssel, Toilettenbrille und Toilettendeckel können schwenkbar miteinander verrastet sein. Anders als bei herkömmlichen Scharnieren ist bei dem erfindungsgemäßen Scharnier eine direkte Anordnung der Scharnierglieder aneinander ohne Gestänge realisierbar. Durch diese Neuerung entgegen dem konventionellen Scharnier wird einerseits Bauraum für die Aufnahme einer ergänzenden Dämpfungsvorrichtung bereitgestellt. Andererseits wird durch die direkte Anordnung ermöglicht, dass das Scharnier sowohl mit als auch ohne ergänzende Dämpfungsvorrichtung als Scharnier eigenständig funktionsfähig ist. Das Scharnier kann hierfür zumindest ein integriertes Rastmittel aufweisen, um eine direkte und platzsparende Anordnung der Scharnierglieder aneinander zu ermöglichen.

Das integrierte Rastmittel kann in Bezug auf die Schwenkachse des Scharniers zumindest teilweise rotationssymmetrisch ausgebildet sein, um eine zweckmäßige drehbare Anordnung Scharnierglieder aneinander zu ermöglichen. Vorteilhafter Weise können derart die Rastmittel randseitig an den Aufnahmen ausgebildet sein, so dass die Aufnahmen bzw. der Aufnahmebereich weitestgehend zur Aufnahme einer Dämpfungsvorrichtung freibleibend ist. Beispielsweise kann das integrierte Rastmittel als kreisförmige Nut ausgebildet sein. Ferner kann das Rastmittel als ringförmiger Vorsprung ausgebildet sein.

Gemäß einer Weiterbildung sind die erste und die zweite Aufnahme des ersten und/oder zweiten Aufnahmebereichs zur form- und/oder kraftschlüssigen Aufnahme einer Dämpfungsvorrichtung ausgebildet. Derart kann besonders einfach und schnell eine Dämpfungsvorrichtung zur Dämpfung der Absenkbewegung der Toilettenbrille in Wirkverbindung mit den der Toilettenschüssel und der Toilettenbrille zugeordneten Aufnahmen angeordnet werden. Auf diese Weise kann die Dämpfungsvorrichtung ferner ohne zusätzliche Befestigungsmittel oder Werkzeuge in dem Scharnier installiert werden.
Dementsprechend sind zur Installation einer Dämpfungseinrichtung zur Dämpfung der Absenkbewegung des Toilettendeckels weiterbildend die erste und dritte Aufnahme des ersten und/oder zweiten Aufnahmebereichs zur form- und/oder kraftschlüssigen Aufnahme einer Dämpfungsvorrichtung ausgebildet.
Beispielsweise können die Aufnahmen eine zumindest teilweise zu einer Dämpfungsvorrichtung korrespondierende Gestalt aufweisen.
Zur form- und/oder kraftschlüssigen Aufnahme einer Dämpfungsvorrichtung weist bzw. weisen die erste, zweite und/oder dritte Aufnahme des ersten und/oder zweiten Aufnahmebereichs gemäß einer Weiterbildung wenigstens eine nutartige Vertiefung auf. Derart ist besonders einfach eine mechanisch lösbare Verbindung zwischen Dämpfungsvorrichtung und Aufnahme realisierbar.
Vorzugweise kann die nutartige Vertiefung derart ausgebildet sein, dass eine ergänzende Dämpfungsvorrichtung, welche einen korrespondierenden Vorsprung zum Eingriff in die nutartige Vertiefung aufweist, in den Aufnahmebereich mit der Vertiefung einschiebbar ist.
Hierfür kann die nutartige Vertiefung eine Längserstreckung aufweisen, die sich parallel zu der Schwenkachse des Scharniers erstreckt, um ein besonders einfaches und schnelles Positionieren einer ergänzenden Dämpfungsvorrichtung in Bezug auf die Schwenkachse des Scharniers zu ermöglichen.
Die nutartige Vertiefung kann beispielsweise als quaderförmige Aussparung ausgebildet sein, die in die Montageöffnung mündet.

Die erfindungsgemäße Aufgabe wird zudem durch ein Scharnier mit einer Toilettenbrille und einem Toilettendeckel gelöst, welches eine Dämpfungsvorrichtung aufweist, wobei die Dämpfungsvorrichtung im Speziellen wie folgt ausgestaltet sein kann.
Die Dämpfungsvorrichtung ist aus mindestens zwei miteinander verbundenen und gegeneinander und um eine gemeinsame Rotationsachse rotierbaren Dämpferteilen gebildet, wobei zwischen den mindestens zwei Dämpferteilen ein Dämpfer zur Dämpfung der Rotationsbewegung vorgesehen ist. Ein derartiger Aufbau hat sich bei Dämpfungseinrichtungen für stationäre Toiletten bereits bewährt. Derartigen Dämpfungsvorrichtungen wurden jedoch bisher nicht für mobile Toiletten verwendet.

Die Dämpfungsvorrichtung ist weiterbildend zur Dämpfung der Schwenkbewegung der Toilettenbrille um die Schwenkachse in der ersten Aufnahme und der zweiten Aufnahme formschlüssig und/oder kraftschlüssig aufnehmbar. Auf diese Weise kann die Dämpfungseinrichtung schnell und ohne zusätzliche Befestigungsmittel oder Werkzeuge in Wirkverbindung zu Toilettenschüssel und Toilettenbrille installiert werden.

Gemäß einer Weiterbildung ist die Dämpfungseinrichtung in der ersten Aufnahme und der dritten Aufnahme formschlüssig und/oder kraftschlüssig aufnehmbar, um dementsprechend eine Dämpfung der Schwenkbewegung des Toilettendeckels, um die Schwenkachse realisieren zu können.

Weiterbildend ist an wenigstens einem Dämpferteil zumindest ein Vorsprung angeordnet. Mittels dieses Vorsprungs ist ein Eingriff der Dämpfungsvorrichtung in das Scharnier für eine form- und/oder kraftschlüssige Verbindung realisierbar.

Besonders bevorzugt ist der Vorsprung zumindest teilweise korrespondierend zu einer nutartigen Vertiefung in dem vorbeschriebenen Scharnier ausgebildet. Der Vorsprung kann eine im Wesentlichen längserstreckende, quaderförmige Gestalt aufweisen.

Die Dämpfungsvorrichtung ist weiterbildend zumindest teilweise symmetrisch, vorzugsweise rotationssymmetrisch in Bezug auf die Schwenkachse ausgebildet ist. Dadurch ist die Dämpfungsvorrichtung besonders einfach in ein Scharnier einführbar.

Beispielsweise kann die Dämpfungsvorrichtung zumindest teilweise zylinderförmig ausgebildet sein. Ferner kann die Dämpfungsvorrichtung zumindest teilweise eine im Wesentlichen quaderförmige Gestalt aufweisen.

Die Aufgabe der Erfindung wird zudem gelöst durch eine eingangs beschriebene mobile Toilette, die ein vorgeschriebenes, erfindungsgemäßes Scharnier aufweist.

Nachfolgend werden das erfindungsgemäße Scharnier und die erfindungsgemäße Dämpfungsvorrichtung sowie die erfindungsgemäße mobile Toilette anhand von jeweils einer in den Zeichnungen dargestellten Ausführungsform näher erläutert. Darin zeigen schematisch:
- Fig. 1: eine perspektivische Ansicht auf eine Anordnung von einem Scharnier in einer mobilen Toilette und vier Dämpfungsvorrichtungen jeweils gemäß der einen Ausführungsform;
- Fig. 2: eine perspektivische Ansicht auf die mobile Toilette;
- Fig. 3: eine Frontansicht auf die eine Ausführungsform des Scharniers und der mobilen Toilette in Schnittdarstellung gemäß Schnittfläche SA;
- Fig. 4: einen vergrößerte Ansicht der Schnittfläche SA;
- Fig. 5: eine Frontansicht auf eine Anordnung eines Scharniers mit zwei Dämpfungsvorrichtungen jeweils gemäß der einen Ausführungsform in Schnittdarstellung;
- Fig. 6: eine Frontansicht auf eine Anordnung eines Scharniers mit zwei installierten Dämpfungsvorrichtungen jeweils gemäß der einen Ausführungsform in Schnittdarstellung;
- Fig. 7: eine Seitenansicht auf die Anordnung gemäß Fig. 6 in Einbaulage in die mobilen Toiletten in Schnittdarstellung gemäß Schnittfläche SB; und
- Fig. 8: eine vergrößerte Ansicht der Schnittfläche SB gemäß Fig. 7.

In den Figuren werden gleiche Bezugszeichen für gleichartige Teile verwendet.

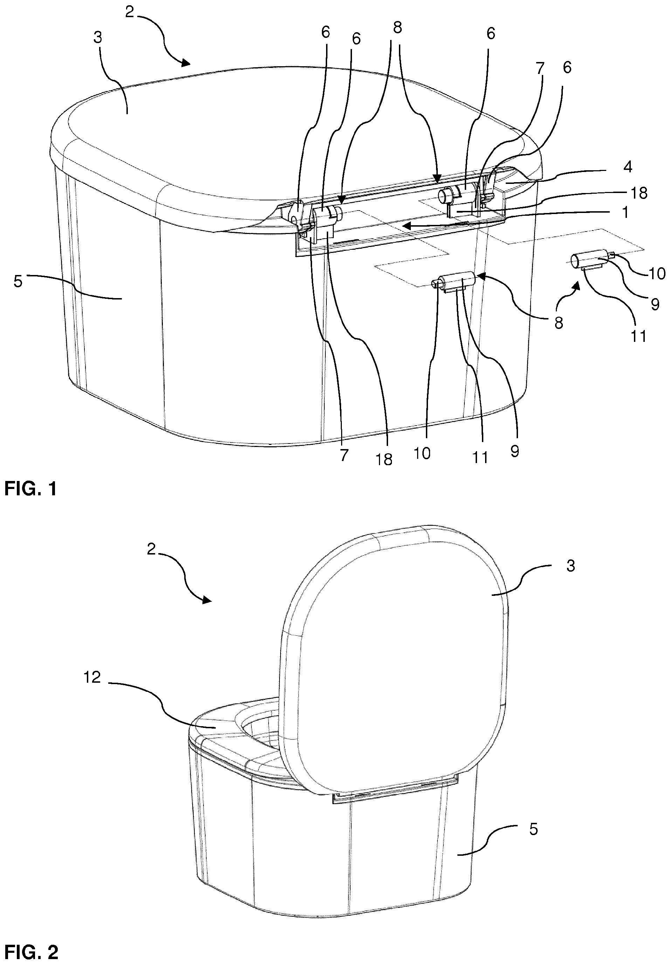

Fig. 1 zeigt die Ausführungsform eines erfindungsgemäßen Scharniers 1 im zusammengebauten Zustand in eine mobile Toilette 2 für einen Caravan mit einem Toilettendeckel 3 sowie einer Toilettenschüssel 4 mit einer Schüsselverkleidung 5. Das Scharnier 1 ist mehrgliedrig ausgebildet und weist vorliegend drei Paar von Scharniergliedern 6 auf. Diese Scharnierglieder 6 sind jeweils einstückig mit den Bestandteilen der Toilette 2 ausgebildet. Ein Paar Scharnierglieder 6 ist einstückig mit dem Toilettendeckel 3 ausgebildet. Ein weiteres Paar Scharnierglieder 6 ist einstückig mit der Toilettenschüssel 4 als eine Scharnieraufnahmeeinrichtung 7 zur Anordnung der restlichen Scharnierglieder an der Toilettenschüssel 4 ausgebildet. Es ist auch denkbar, diese Scharnieraufnahmeeinrichtung 7 separat von der Toilettenschüssel 4 auszubilden, um auch eine Verwendung bei herkömmlichen Toiletten mit einer Toilettenschüssel aus Keramik zu ermöglichen.

Zudem zeigt Fig. 1 die Ausführungsform einer erfindungsgemäßen Dämpfungsvorrichtung 8. Ein Paar derartiger Dämpfungsvorrichtungen 8 ist zur Nachrüstung in dem Scharnier 1 installiert. Ferner ist ein weiteres Paar Dämpfungsvorrichtungen 8 dargestellt. Die Dämpfungsvorrichtungen 8 weisen jeweils einen im Wesentlichen zylinderförmigen Grundkörper 9 und einen im Wesentlichen quaderförmigen Rotationskörper 10 auf, welche rotierbar aneinander angeordnet sind.

Ferner weist die erfindungsgemäße Dämpfungsvorrichtung 8 einen spundartigen Vorsprung 11 auf, der im Wesentlichen quaderförmig ausgebildet ist und sich in Längsrichtung des zylinderförmigen Grundkörpers 9 erstreckt.

Fig. 2 zeigt die mobile Toilette 2 mit einem hochgeklappten Deckel 3. Die mobile Toilette 2 weist eine Toilettenbrille 12 auf.

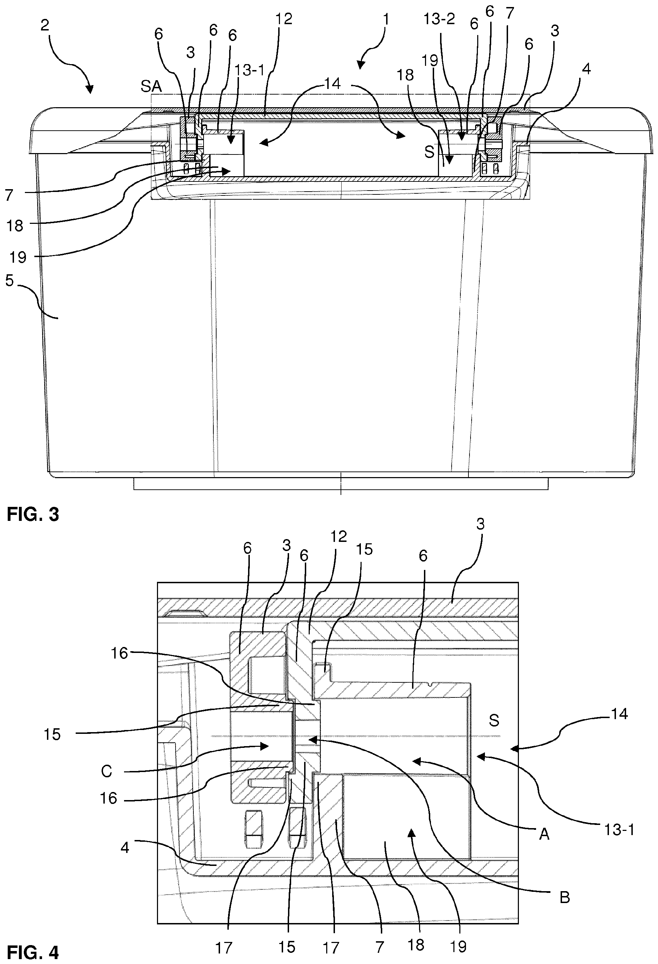

Fig. 3 zeigt, dass das Scharnier 1 gemäß der in Fig. 1 dargestellten Ausführungsform, zudem ein paar Scharnierglieder 6 umfasst, die einstückig mit der Toilettenbrille 12 ausgebildet sind. Das Scharnier 1 weist eine Schwenkachse S auf, wobei die angelagerte Toilettenbrille 12 und der Toilettendeckel 3 in Bezug auf diese Schwenkachse S schwenkbar mittels des Scharniers 1 an der Toilettenschüssel 4 gelagert sind.

Im Weiteren zeigt Fig. 3, dass das erfindungsgemäße Scharnier 1 zwei sich gegenüberliegende Aufnahmebereiche 13-1, 13-2 aufweist, einen ersten linkseitigen Aufnahmebereich 13-1 und einen zweiten rechtsseitigen Aufnahmebereich 13-2, die jeweils zur Aufnahme einer ergänzenden Dämpfungsvorrichtung 8 ausgebildet sind. Diese Aufnahmebereiche 13-1, 13-2 sind mittels Montageöffnungen 14 auch im zusammengebauten Zustand des Scharniers zugänglich. Die Scharnierglieder 6 sind ineinander verrastet.

Fig. 4 zeigt einen vergrößerten Ausschnitt des linken Bereichs des Scharniers 1 gemäß Fig. 3. Der erste linke Aufnahmebereich 13-1 des Scharniers 1 weist drei Aufnahmen A, B, C auf, wobei die erste Aufnahme A der Toilettenschüssel 4, die zweite Aufnahme B der Toilettenbrille 12 und die dritte Aufnahme C dem Toilettendeckel 3 zugeordnet ist. Die zweite Aufnahme B ist an dem einstückig mit der Toilettenbrille 12 ausgebildete Scharnierglied 6 angeordnet. Zur Aufnahme einer Dämpfungsvorrichtung 8 zur Dämpfung der Absenkbewegung der Toilettenbrille 12 ist die zweite Aufnahme B zur formschlüssigen Aufnahme des Rotationskörpers 10 der Dämpfungsvorrichtung 8 ausgebildet. An dem einstückig mit der Toilettenschüssel 4 ausgebildete Scharnierglied 6 ist eine in Bezug auf die Schwenkachse S rotationssymmetrische erste Aufnahme A angeordnet. In dieser ersten Aufnahme A ist der korrespondierend ausgebildete zylindrische Grundkörper 9 der erfindungsgemäß ausgebildeten Dämpfungsvorrichtung 8 formschlüssig anordbar. Die dritte Aufnahme C, die an dem einstückig mit dem Toilettendeckel 3 ausgebildeten Scharnierglieds 6 angeordnet ist, ist hingegen nicht für eine Wirkverbindung mit der Dämpfungsvorrichtung 8 ausgebildet.

Fig. 4 zeigt ferner, dass die Scharnierglieder 6 bzw. die Aufnahmen A, B, C, integrierte Rastmittel 15 aufweisen. Die Rastmittel 15 sind vorliegend bezüglich der Schwenkachse S des Scharniers rotationssymmetrisch ausgebildet, wodurch die verrasteten Scharnierglieder 6 drehbar sind. In Einbaulage greifen als ringförmige Vorsprünge 16 ausgebildete Rastmittel 15 der äußeren Scharnierglieder 6 in korrespondierende, als kreisförmige Nuten 17 ausgebildete Rastmittel 15 der jeweils inneren Scharnierglieder 6. Die Rastmittel 15 sind jeweils randseitig an den Aufnahmen A, B, C der Scharnierglieder 6 ausgebildet.

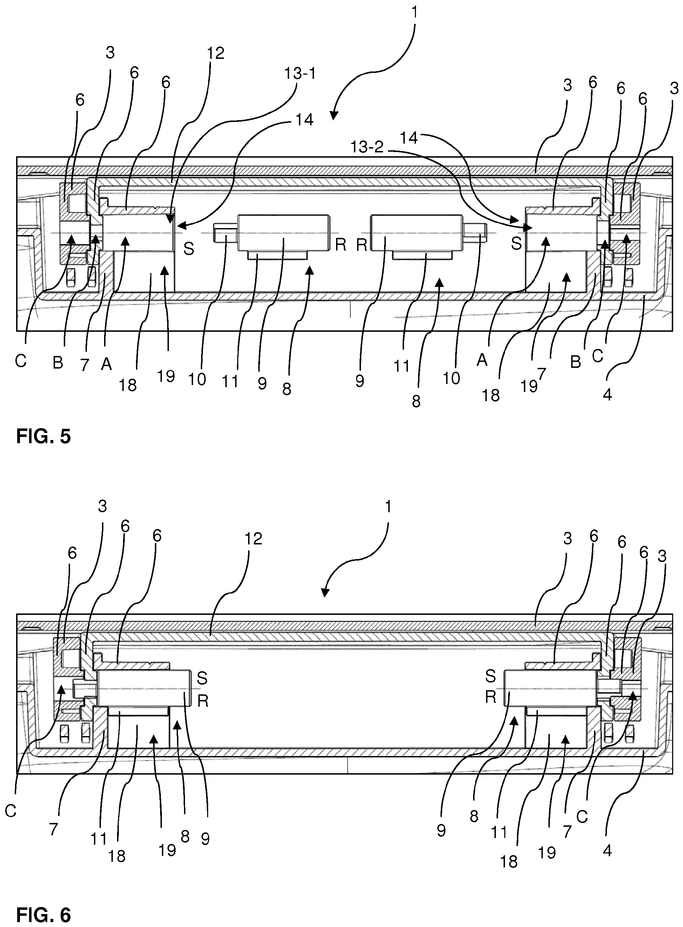

Fig. 5 zeigt eine Anordnung aus einem Scharnier 1 gemäß der in den Fig. 1, Fig. 3 und Fig. 4 dargestellten Ausführungsform und zwei Dämpfungsvorrichtungen 8 gemäß der in Fig. 1 dargestellten Ausführungsform. Der rechtsseitige zweite Aufnahmebereich 13-2 weist ebenfalls drei Aufnahmen A, B C auf, die jeweils Toilettenschüssel 4, Toilettenbrille 12 und Toilettendeckel 3 zugeordnet sind. Die Scharnierglieder 6 in dem rechten Bereich des erfindungsgemäßen Scharniers 1 sind zur Aufnahme einer Dämpfungsvorrichtung 8 zur Dämpfung der Absenkbewegung des Toilettendeckels 3 ausgebildet. Hierfür ist die Aufnahme C des mit dem Toilettendeckel 3 einstückig ausgebildeten Scharnierglieds 6 zur formschlüssigen Aufnahme des Rotationskörpers 10 der Dämpfungsvorrichtung 8 ausgebildet. Die Aufnahme B des einstückig mit der Toilettenbrille 12 ausgebildeten Scharnierglieds 6 ist nicht für eine formschlüssige Aufnahme des Rotationskörpers 10 ausgelegt. Das rechtseitige, einstückig mit der Toilettenschüssel 4 ausgebildete Scharnierglied 6 weist eine Aufnahme A zur formschlüssigen Aufnahme des zylindrischen Grundkörpers 9 der Dämpfungsvorrichtung 8 auf. Auf diese Weise ist eine Wirkverbindung der Dämpfungsvorrichtung 8 mit dem Toilettendeckel 3 realisierbar.

Wie in Fig. 5 dargestellt, weisen die Dämpfungsvorrichtungen 8 jeweils eine Rotationsachse R auf. Die zylindrischen Grundkörper 9 der Dämpfungsvorrichtungen 8 sind rotationssymmetrisch, die Rotationskörper 10 sind symmetrisch zu dieser Rotationsachse R ausgebildet. Zum Einführen der Dämpfungsvorrichtungen 8 in die Aufnahmebereiche 13 des erfindungsgemäßen Scharniers 1 sind die Rotationskörper 10 der Dämpfungsvorrichtungen 8 zur Montageöffnung 14 hin ausgerichtet. Ferner fluchten die Rotationsachsen R der Dämpfungsvorrichtungen 8 mit der Schwenkachse S des Scharniers 1.

Fig. 6 zeigt eine Anordnung der in Fig. 1 und Fig. 3 bis Fig. 5 dargestellten Ausführungsform des Scharniers 1 mit zwei installierten Dämpfungsvorrichtungen 8 gemäß der in Fig. 1 und Fig. 5 dargestellten Ausführungsform. Die Dämpfungsvorrichtungen 8 sind in den Aufnahmen A, B, C der jeweiligen Aufnahmebereichen 13-1, 13-2 des Scharniers 1 angeordnet, wobei die Aufnahmebereiche 13-1, 13-2 und die Dämpfungsvorrichtungen 8 derart korrespondieren, dass die jeweiligen Rotationsachsen R deckungsgleich mit der Schwenkachse S des Scharniers 1 ausgerichtet sind. Die Grundkörper 9 der Dämpfungseinrichtungen 8 sind jeweils formschlüssig in den beiden Aufnahmen A, die der Toilettenschüssel zuordnet sind, verankert. Die Dämpfungsvorrichtung 8 auf der linken Seite des Scharniers 1 ist in Wirkverbindung der Toilettenbrille 12. Hierfür ist der Rotationskörper 10 der linksseitig angeordneten Dämpfungsvorrichtung 8 formschlüssig in der Aufnahme B des einstückig mit der Toilettenbrille 12 ausgebildeten Scharnierglieds 6 angeordnet. Die Dämpfungsvorrichtung 8 auf der rechten Seite ist hingegen in Wirkverbindung mit dem Toilettendeckel 3. Der Rotationskörper 10 der rechtsseitigen Dämpfungsvorrichtung 10 ist formschlüssig in dem Aufnahmebereich C des einstückig mit dem Toilettendeckel 3 ausgebildeten Scharnierglieds 6 angeordnet.

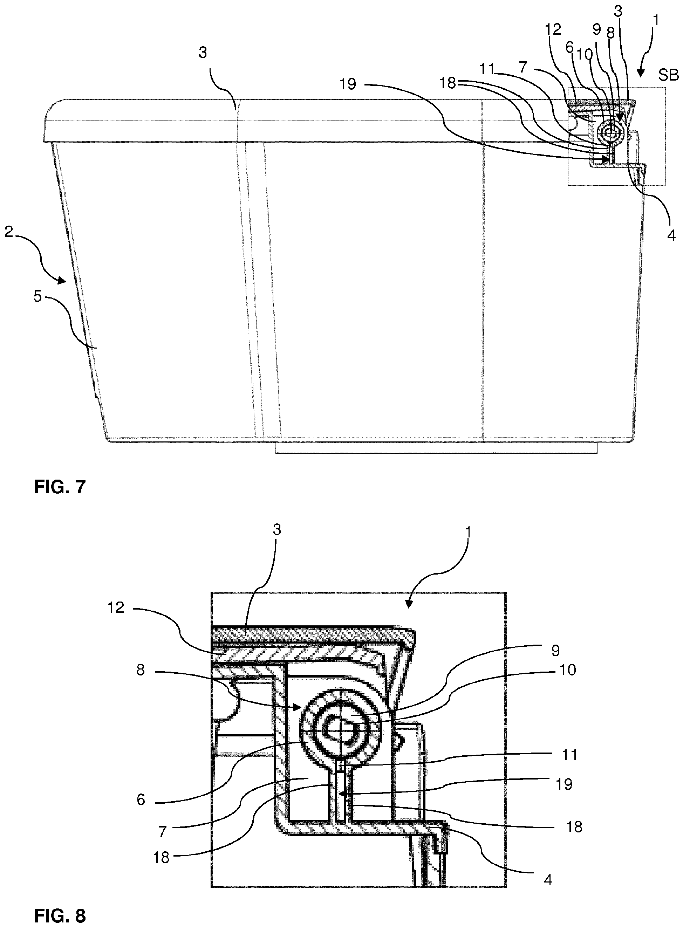

Fig. 7 zeigt eine Seitenansicht auf den ersten Aufnahmebereich 13-1 der Anordnung gemäß Fig. 6. Die einstückig mit der Toilettenschüssel 4 ausgebildete Scharnierglieder 6 weisen jeweils zwei parallel verlaufende, zueinander beabstandete Wandungen 18 auf. Die Wandungen 18 sind derart voneinander beabstandet, dass die Aufnahme A eine nutartige Vertiefung 19 zur Aufnahme des spundartigen Vorsprungs 11 der Dämpfungseinrichtung aufweist, vgl. Figur 4. Die Vertiefung 19 mündet in der jeweiligen Montageöffnung 14.

Fig. 8 zeigt einen vergrößerten Ausschnitt der vorgenannten Anordnung gemäß Fig. 7. Fig. 7 und Fig. 8 zeigen, dass der zylindrischen Grundkörper 9 und der spundartige Vorsprung der Dämpfungsvorrichtung 8 formschlüssig Aufnahme A und der Nut 19 des einstückig mit der Toilettenschüssel 4 ausgebildeten Scharnierglieds 6 angeordnet sind.

### Bezugszeichen

- 1: Scharnier
- 2: Toilette
- 3: Toilettendeckel
- 4: Toilettenschüssel
- 5: Schüsselverkleidung
- 6: Scharnierglied
- 7: Scharnieraufnahmeeinrichtung
- 8: Dämpfungsvorrichtung
- 9: Grundkörper
- 10: Rotationskörper
- 11: Vorsprung
- 12: Toilettenbrille
- 13- 1: erster Aufnahmebereich
- 13- 2: zweiter Aufnahmebereich
- 14: Montageöffnung
- 15: Rastmittel
- 16: Vorsprung
- 17: Nut
- 18: Wandung
- 19: Vertiefung
- A: erste Aufnahme
- B: zweite Aufnahme
- C: dritte Aufnahme
- R: Rotationsachse
- S: Schwenkachse
- SA: Schnittfläche
- SB: Schnittfläche

## Patentansprüche

1. Scharnier (1) mit einer Toilettenbrille (12) und einem Toilettendeckel (3) zur Verwendung in einer eine Toilettenschüssel (4) aufweisenden mobilen Toilette (2), wobei die Toilettenbrille (12) und der Toilettendeckel (3) durch das Scharnier (1) jeweils verschwenkbar an der Toilettenschüssel (4) anordenbar sind und eine gemeinsame Schwenkachse (S) aufweisen, wobei das Scharnier (1) zumindest einen Aufnahmebereich (13-1) aufweist, der zur Aufnahme mindestens einer nachrüstbaren Dämpfungsvorrichtung (8) zur Dämpfung der Schwenkbewegung der Toilettenbrille (12) oder des Toilettendeckels (3) um die Schwenkachse (S1) ausgebildet ist, wobei zum Einführen der mindestens einen Dämpfungsvorrichtung (8) in den mindestens einen Aufnahmebereich (13-1) des Scharniers (1) ein Rotationskörper (10) der Dämpfungsvorrichtung (8) zu einer Montageöffnung (14) des Aufnahmebereichs (13-1) hin ausgerichtet ist, **dadurch gekennzeichnet, dass** der Aufnahmebereich (13-1) ausgebildet ist, die mindestens eine nachrüstbare Dämpfungsvorrichtung (8) ohne Demontage der Toilettenbrille (12) oder des Toilettendeckels (3) von der Toilettenschüssel (4) im zusammengebauten Zustand des Scharniers (1) aufzunehmen.

2. Scharnier (1) nach Anspruch 1, **dadurch gekennzeichnet, dass** das Scharnier einen zweiten Aufnahmebereich (13-2) aufweist, der zur Aufnahme einer zweiten Dämpfungsvorrichtung (8) zur Dämpfung der Schwenkbewegung der Toilettenbrille (12) oder des Toilettendeckels (3) um die Schwenkachse (S1) ausgebildet ist.

3. Scharnier (1) nach Anspruch 2, **dadurch gekennzeichnet, dass** der erste und/oder zweite Aufnahmebereich (13-1, 13-2) eine Montageöffnung (14) zum vorzugsweise werkzeuglosen Einführen einer Dämpfungsvorrichtung (8) in den ersten und/oder zweiten Aufnahmebereich (13-1, 13-2) aufweist.

4. Scharnier (1) nach einem der vorhergehenden Ansprüche 2 oder 3, **dadurch gekennzeichnet, dass** der erste und/oder zweite Aufnahmebereich (13-1, 13-2) zumindest teilweise symmetrisch, vorzugsweise rotationssymmetrisch in Bezug auf die Schwenkachse (S) ausgebildet ist.

5. Scharnier (1) nach einem der vorhergehenden Ansprüche 2 bis 4, **dadurch gekennzeichnet, dass** der erste und/ oder zweite Aufnahmebereich (13-1, 13-2) gebildet ist aus einer der Toilettenschüssel (4) zugeordneten ersten Aufnahme (A), einer der Toilettenbrille (12) zugeordneten zweiten Aufnahme (B) und einer dem Toilettendeckel (3) zugeordneten dritten Aufnahme (C).

6. Scharnier (1) nach Anspruch 5, **dadurch gekennzeichnet, dass** die erste Aufnahme (A) einstückig mit der Toilettenschüssel (4) ausgebildet ist, die zweite Aufnahme (B) einstückig mit der Toilettenbrille (12) ausgebildet ist, und die dritte Aufnahme (C) einstückig mit dem Toilettendeckel (3) ausgebildet ist.

7. Scharnier (1) nach einem der vorhergehenden Ansprüche 5 oder 6, **dadurch gekennzeichnet, dass** die erste und zweite Aufnahme (A, B) des ersten und/oder zweiten Aufnahmebereichs (13-1, 13-2) zur form- und/oder kraftschlüssigen Aufnahme einer Dämpfungsvorrichtung (8) ausgebildet sind.

8. Scharnier (1) nach einem der vorhergehenden Ansprüche 5 bis 7, **dadurch gekennzeichnet, dass** die erste und dritte Aufnahme (A, C) des ersten und/oder zweiten Aufnahmebereichs (13-1, 13-2) zur form- und/oder kraftschlüssigen Aufnahme einer Dämpfungsvorrichtung (8) ausgebildet sind.

9. Scharnier (1) nach einem der vorhergehenden Ansprüche 5 bis 8, **dadurch gekennzeichnet, dass** die erste, zweite und/oder dritte Aufnahme (A, B, C) des ersten und/oder zweiten Aufnahmebereichs (13-1, 13-2) wenigstens eine nutartige Vertiefung (19) aufweist /aufweisen.

10. Scharnier (1) nach einem der vorhergehenden Ansprüche, **dadurch gekennzeichnet, dass** die Dämpfungsvorrichtung (8) aus mindestens zwei miteinander verbundenen und gegeneinander und um eine gemeinsame Rotationsachse (R) rotierbaren Dämpferteilen (9, 10) gebildet ist und zwischen den mindestens zwei Dämpferteilen (9, 10) ein Dämpfer zur Dämpfung der Rotationsbewegung vorgesehen ist.

11. Scharnier (1) nach Anspruch 10 und einem der Ansprüche 5 bis 9, **dadurch gekennzeichnet, dass** die Dämpfungsvorrichtung (8) zur Dämpfung der Schwenkbewegung der Toilettenbrille (12) um die Schwenkachse (S) in der ersten Aufnahme (A) und der zweiten Aufnahme (B) formschlüssig und/oder kraftschlüssig aufnehmbar ist.

12. Scharnier (1) nach Anspruch 10 und einem der Ansprüche 5 bis 9 oder nach Anspruch 11, **dadurch gekennzeichnet, dass** die Dämpfungsvorrichtung (8) zur Dämpfung der Schwenkbewegung des Toilettendeckels (3) um die Schwenkachse (S) in der ersten Aufnahme (A) und der dritten Aufnahme (C) formschlüssig und/oder kraftschlüssig aufnehmbar ist.

13. Scharnier (1) nach einem der vorhergehenden Ansprüche 10 bis 12, **dadurch gekennzeichnet, dass** an wenigstens einem Dämpferteil (9, 10) zumindest ein Vorsprung (11) angeordnet ist.

14. Scharnier (1) nach einem der vorhergehenden Ansprüche 10 bis 13, **dadurch gekennzeichnet, dass** die Dämpfungsvorrichtung (8) zumindest teilweise symmetrisch, vorzugsweise rotationssymmetrisch in Bezug auf die Schwenkachse (S) ausgebildet ist.

15. Mobile Toilette (2) mit einer Toilettenschüssel (4) und einem Scharnier (1) gemäß einem der Ansprüche 1 bis 14, wobei die Toilettenbrille (12) und der Toilettendeckel (3) durch das Scharnier (1) jeweils verschwenkbar an der Toilettenschüssel (4) angeordnet sind und eine gemeinsame Schwenkachse (S) aufweisen.

## Claims

1. A hinge (1), having a toilet seat (12) and a toilet lid (3) for use in a mobile toilet (2) provided with a toilet bowl (4), wherein the toilet seat (12) and the toilet lid (3) each may be swivel-mounted to the toilet bowl (4) by the hinge (1) and have a common pivot axis (S), wherein the hinge (1) has at least one receiving area (13-1), which is adapted for receiving of at least one retrofittable damping device (8) for damping the swiveling motion of the toilet seat (12) or the toilet lid (3) about the pivot axis (S1), wherein, for introducing the at least one damping device (8) into the at least one receiving area (13-1) of the hinge (1) a rotational body (10) of the damping device (8) is aligned towards a mounting opening (14) of the receiving area (13-1), **characterized in that** the receiving area (13-1) is adapted for receiving the at least one retrofittable damping device (8) without disassembling the toilet seat (12) or the toilet lid (3) from the toilet bowl (4), in the assembled condition of the hinge (1).

2. The hinge (1) of claim 1, **characterized in that** the hinge has a second receiving area (13-2), which is adapted for receiving a second damping device (8) for damping the swiveling motion of the toilet seat (12) or the toilet lid (3) about the pivot axis (S1).

3. The hinge (1) of claim 2, **characterized in that** the first and/or second receiving area (13-1, 13-2) have a mounting opening (14) for introducing, preferably without the use of tools, of a damping device (8) into the first and/or second receiving area (13-1, 13-2).

4. The hinge (1) of any of the preceding claims 2 or 3, **characterized in that** the first and/or second receiving area (13-1, 13-2) are at least partially symmetrically arranged, preferably with a rotational symmetry, with respect to the pivot axis (S).

5. The hinge (1) of any of the preceding claims 2 to 4, **characterized in that** the first and/or second receiving area (13-1, 13-2) are formed by a first receptacle (A) associated to the toilet bowl (4), a second receptacle (B) associated to the toilet seat (12) and a third receptacle (C) associated to the toilet lid (3).

6. The hinge (1) of claim 5, **characterized in that** the first receptacle (A) is integrally formed with the toilet bowl (4), the second receptacle is integrally formed with the toilet seat (12) and the third receptacle (C) is integrally formed with the toilet lid (3).

7. The hinge (1) of any of claims 5 or 6, **characterized in that** the first and second receptacle (A, B) of the first and/or second receiving area (13-1, 13-2) are adapted for receiving the damping device (8) with a form fit and/or a force fit.

8. The hinge (1) of any of the preceding claims 5 to 7, **characterized in that** the first and third receptacle (A, C) of the first and/or second receiving area (13-1, 13-2) are adapted for receiving the damping device (8) with a form fit and/or a force fit.

9. The hinge (1) of any of the preceding claims 5 to 8, **characterized in that** the first, second and/or third receptacle (A, B, C) of the first and/or second receiving area (13-1, 13-2) have at least one slot-like recess (19).

10. The hinge (1) of any of the preceding claims, **characterized in that** the damping device (8) is comprised of at least two damping parts (9, 10), which are connected to each other and may be rotated to one another about a common rotational axis (R), and between the at least two damping parts (9, 10) a damping element for damping the rotational motion is provided.

11. The hinge (1) of claim 10 and any of claims 5 to 9, **characterized in that** the damping device (8) may be received, with a form fit and/or a force fit, in the first receptacle (A) and the second receptacle (B) for damping the swiveling motion of the toilet seat (12) about the pivot axis (S).

12. The hinge (1) of claim 10 and any of claims 5 to 9 or claim 11, **characterized in that** the damping device (8) may be received, with a form fit and/or a force fit, in the first receptacle (A) and the third receptacle (C) for damping the swiveling motion of the toilet lid (3) about the pivot axis (S).

13. The hinge (1) of any of claims 10 to 12, **characterized in that** at least one protrusion (11) is provided on at least one damping part (9, 10).

14. The hinge (1) of any of preceding claims 10 to 13, **characterized in that** the damping device (8) is at least partially symmetrically arranged, preferably with a rotational symmetry, with respect to the pivot axis (S).

15. A mobile toilet (2) having a toilet bowl (4) and a hinge according to any of claims 1 to 14, wherein each of the toilet seat (12) and the toilet lid (3) are swivel-mounted to the toilet bowl (4) by the hinge (1) and have a common pivot axis (S).

## Revendications

1. Charnière (1) comportant un siège de toilettes (12) et un couvercle de toilettes (3) pour une utilisation dans des toilettes mobiles (2) présentant une cuvette de toilettes (4), le siège de toilettes (12) et le couvercle de toilettes (3) pouvant chacun être disposés contre la cuvette de toilettes (4) par pivotement au moyen de la charnière (1) et comportant un axe de pivotement commun (S), la charnière (1) comportant au moins une zone de réception (13-1), conçue pour recevoir au moins un dispositif d'amortissement de seconde monte (8) destiné à amortir le mouvement de pivotement du siège de toilettes (12) ou du couvercle de toilettes (3) sur l'axe de pivotement (S1), un élément rotatif (10) du dispositif d'amortissement (8) étant aligné avec une ouverture de montage (14) de la zone de réception (13-1) pour introduire l'au moins un dispositif d'amortissement (8) dans l'au moins une zone de réception (13-1) de la charnière (1), **caractérisée en ce que** la zone de réception (13-1) est conçue pour recevoir l'au moins un dispositif d'amortissement de seconde monte (8) sans avoir à démonter le siège de toilettes (12) ni le couvercle de toilettes (3) de la cuvette de toilettes (4) lorsque la charnière (1) est assemblée.

2. Charnière (1) selon la revendication 1, **caractérisée en ce que** la charnière comporte une seconde zone de réception (13-2), conçue pour recevoir un second dispositif d'amortissement (8) destiné à amortir le mouvement de pivotement du siège de toilettes (12) ou du couvercle de toilettes (3) sur l'axe de pivotement (S1).

3. Charnière (1) selon la revendication 2, **caractérisée en ce que** la première et/ou la seconde zone de réception (13-1, 13-2) comporte une ouverture de montage (14) destinée à introduire, de préférence sans outil, un dispositif d'amortissement (8) dans la première et/ou la seconde zone de réception (13-1, 13-2).

4. Charnière (1) selon l'une quelconque des revendications 2 ou 3 ci-dessus, **caractérisée en ce que,** la première et/ou la seconde zone de réception (13-1, 13-2) est conçue de façon au moins partiellement symétrique, de préférence à symétrie de révolution, par rapport à l'axe de pivotement (S).

5. Charnière (1) selon l'une quelconque des revendications 2 à 4 ci-dessus, **caractérisée en ce que,** la première et/ou la seconde zone de réception (13-1, 13-2) est formée d'un premier logement (A) affecté à la cuvette de toilettes (4), d'un deuxième logement (B) affecté au siège de toilettes (12) et d'un troisième logement (C) affecté au couvercle de toilettes (3).

6. Charnière (1) selon la revendication 5, **caractérisée en ce que** le premier logement (A) est conçu d'un seul tenant avec la cuvette de toilettes (4), le deuxième logement (B) est conçu d'un seul tenant avec le siège de toilettes (12), et le troisième logement (C) est conçu d'un seul tenant avec le couvercle de toilettes (3).

7. Charnière (1) selon l'une quelconque des revendications 5 ou 6 ci-dessus, **caractérisée en ce que** les premier et deuxième logements (A, B) de la première et/ou seconde zone de réception (13-1, 13-2) sont conçus pour recevoir un dispositif d'amortissement (8) par complémentarité de formes et/ou en force.

8. Charnière (1) selon l'une quelconque des revendications 5 à 7 ci-dessus, **caractérisée en ce que** les premier et troisième logements (A, C) de la première et/ou de la seconde zone de réception (13-1, 13-2) sont conçus pour recevoir un dispositif d'amortissement (8) par complémentarité de formes et/ou en force.

9. Charnière (1) selon l'une quelconque des revendications 5 à 8 ci-dessus, **caractérisée en ce que** les premier, deuxième et troisième logements (A, B, C) de la première et/ou de la seconde zone de réception (13-1, 13-2) comportent au moins un renfoncement (19) semblable à une rainure.

10. Charnière (1) selon l'une quelconque des revendications précédentes, **caractérisée en ce que** le dispositif d'amortissement (8) est formé d'au moins deux éléments d'amortissement (9, 10) reliés l'un avec l'autre et aptes à pivoter l'un par rapport à l'autre et sur un axe de rotation commun (R) et **en ce qu'**un amortisseur est prévu entre les au moins deux éléments d'amortissement (9, 10) pour amortir le mouvement de rotation.

11. Charnière (1) selon la revendication 10 et l'une quelconque des revendications 5 à 9, **caractérisée en ce que** le dispositif d'amortissement (8) destiné à amortir le mouvement de pivotement du siège de toilettes (12) sur l'axe de pivotement (S) peut être reçu dans le premier logement (A) et dans le deuxième logement (B) par complémentarité de formes et/ou en force.

12. Charnière (1) selon la revendication 10 et l'une quelconque des revendications 5 à 9 ou selon la revendication 11, **caractérisée en ce que** le dispositif d'amortissement (8) destiné à amortir le mouvement de pivotement du couvercle de toilettes (3) sur l'axe de pivotement (S) peut être reçu dans le premier logement (A) et dans le troisième logement (C) par complémentarité de formes et/ou en force.

13. Charnière (1) selon l'une quelconque des revendications 10 à 12 ci-dessus, **caractérisée en ce qu'au** moins une saillie (11) est disposée au niveau d'au moins un élément d'amortissement (9, 10).

14. Charnière (1) selon l'une quelconque des revendications 10 à 13 ci-dessus, **caractérisée en ce que** le dispositif d'amortissement (8) est conçu de façon au moins partiellement symétrique, de préférence à symétrie de révolution par rapport à l'axe de pivotement (S).

15. Toilettes mobiles (2) comportant une cuvette de toilettes (4) et une charnière (1) selon l'une quelconque des revendications 1 à 14, dans lesquelles le siège de toilettes (12) et le couvercle de toilettes (3) peuvent chacun être disposés contre la cuvette de toilettes (4) par pivotement au moyen de la charnière (1) et comportent un axe de pivotement commun (S).
